# EUROPÄISCHE PATENTSCHRIFT

(11) **EP 1 561 615 B1**
(45) Veröffentlichungstag und Bekanntmachung des Hinweises auf die Patenterteilung: **07.05.2008**
(21) Anmeldenummer: 04290327.8
(22) Anmeldetag: 09.02.2004
(51) Int. Cl.: B60H 1/00

(54) **Vorrichtung zum Austausch von Wärme**
Heat exchanging device
Echangeur de chaleur

(43) Veröffentlichungstag der Anmeldung: 10.08.2005
(73) Patentinhaber: Behr France Rouffach SAS, 68250 Rouffach (FR)
(72) Erfinder: Mehul, Xavier, 67560 Rosheim (FR); Sehmann, Daniel, 67860 Rhinau (FR)
(74) Vertreter: Grauel, Andreas

(56) Entgegenhaltungen:
- EP-A- 0 663 309
- EP-A- 0 826 528
- DE-A- 10 121 286

## Beschreibung

Die vorliegende Erfindung bezieht sich auf eine Vorrichtung zum Austausch von Wärme, insbesondere für ein Kraftfahrzeug. Derartige Vorrichtungen zum Austausch von Wärme sind aus dem Stand der Technik, seit langem bekannt. Dabei sind Kraftfahrzeuge in unterschiedlichen Preisklassen teilweise mit unterschiedlichen Einrichtungen zum Austausch von Wärme ausgestattet und weisen teilweise Klimaanlagen und teilweise keine Klimaanlagen auf.

Dabei besteht aus Kostengründen ein Bedürfnis, eine Version ohne Klimaanlage mit geringem Bauaufwand in eine Version mit Klimaanlage zu überführen, um auf diese Weise den gesamten Herstellungsaufwand zu reduzieren. Eine derartige Überführung könnte beispielsweise durch Weglassung der für eine Klimaanlage A essentiellen Bauteile, wie beispielsweise des Verdampfers, geschehen. Allerdings ändert sich durch die Weglassung der für eine Klimaanlage essentiellen Bauteile die Strömungsführung der Luft durch die gesamte Vorrichtung. Es besteht deswegen ein Bedürfnis, eine Möglichkeit zu schaffen, eine Vorrichtung mit Klimaanlage in einfacher Weise in eine Vorrichtung ohne Klimaanlage überführen zu können, ohne dafür tiefgreifende konstruktive Veränderungen an den Vorrichtungen vorzunehmen.

Zu diesem Zweck wird im gattungsgemäßen Dokument EP-A-0 663 309 eine Vorrichtung zum Austausch von Wärme offenbart, insbesondere für ein Kraftfahrzeug, die wenigstens ein Gehäuse, in welchem Luft wenigstens abschnittsweise auf einem vorbestimmten Pfad geführt wird, wenigstens eine erste Einrichtung zum Austausch von Wärme, wenigstens einen Lufteinlass und wenigstens einen Luftauslass aufweist. Dabei ist wenigstens eine erste Adaptionseinrichtung auf dem Pfad der Luft angeordnet, wobei die Beeinflussung einer durch die erste Adaptionseinrichtung hindurchtretenden Luftströmung an die Beeinflussung einer anstelle der ersten Adaptionseinrichtung vorsehbaren zweiten Einrichtung zum Austausch von Wärme angepasst ist. Dabei in einer weiteren bevorzugten Ausführungsform der Erfindung weist die erste Adaptionseinrichtung wenigstens eine Wand auf, durch welche die Hauptströmungsrichtung der durch die erste Adaptionseinrichtung hindurchtretenden Luft beeinflusst wird. Mit der Hauptströmungsrichtung der Luft wird dabei die Richtung der Luft bezeichnet; die senkrecht zu der von dem Auslass aufgespannten Ebene verläuft.

Ein Vorteil dieser Vorrichtung zum Austausch von Wärme besteht darin, dass eine Version, welche zwei Einrichtungen zum Austausch von Wärme, wie beispielsweise einen Verdampfer sowie eine Heizeinrichtung vorsieht, auf einfache Weise durch die Verwendung der Adaptionseinrichtung in eine Version mit nur einer Einrichtung zum Austausch von Wärme, beispielsweise einer Heizeinrichtung, überführt werden kann.

Der Erfindung liegt die Aufgabe zu grunde, die Anpassung der Strömung zu verbessern. Dies wird erfindungsgemäß dadurch erreicht, dass die erste Adaptionseinrichtung im Wesentlichen den vollständigen Querschnitt des Luftauslasses abdeckt, und eine Vielzahl von zweiten Wänden aufweist, die gegenüber der Hauptströmungsrichtung der Luft unter einen vorgegebenen Winkel geneigt sind.

Unter einer Adaptionseinrichtung wird eine Einrichtung verstanden, die in oder an der Vorrichtung zum Austausch von Wärme angeordnet werden kann und eine durch sie hindurchtretende Luftströmung in wenigstens einer Eigenschaft beeinflusst.

Unter einer Beeinflussung der Luftströmung wird verstanden, dass insbesondere die Richtung dieser Strömung wenigstens abschnittsweise geändert würde. Auch eine Änderung nur eines Anteils dieser Strömung würde als Beeinflussung aufgefasst, beispielsweise der Fall, in welchem ein zentraler Bereich des Strömungsquerschnittes unverändert bleibt und Randbereiche hinsichtlich ihrer Richtung geändert werden oder umgekehrt der Strömungsquerschnitt in Randbereichen unverändert bleibt und in seinem Zentralbereich wenigstens abschnittsweise geändert wird.

Unter dem Pfad der Luft zwischen dem Einlass und dem Auslass wird im Wesentlichen jeder vollständige Strömungsweg der Luft zwischen dem Lufteinlass und dem Luftauslass sowie auch die Bereiche verstanden, welche in Strömungsrichtung unmittelbar vor dem Einlass bzw. hinter dem Auslass liegen. Daher ist auch eine in Strömungsrichtung direkt vor dem Einlass oder direkt hinter dem Auslass der Vorrichtung angeordnete Einrichtung auf dem Pfad der Luft angeordnet.

Unter angepasst wird nicht verstanden, dass die Strömungsverhältnisse beim Durchtritt der Luft durch die Adaptionseinrichtung den Verhältnissen beim Durchtritt durch eine anstelle der Adaptionsvorrichtung vorgesehenen Einrichtung zum Austausch von Wärme entsprechen müssen. Vielmehr wird unter angepasst verstanden, dass die Adaptionseinrichtung bewirkt, dass die Strömung der Luft gleichmäßiger über den Querschnitt des Auslasses der Vorrichtung verteilt ist, als in dem Fall, in dem weder eine Adaptionseinrichtung noch eine Einrichtung zum Austausch von Wärme vorgesehen sind. Dabei ist zu beachten, dass auch die zweite Einrichtung zum Austausch von Wärme bewirkt, dass die durch sie hindurchtretende Luft gleichmäßiger über den Querschnitt des Auslasses der Vorrichtung verteilt ist, als wenn keine Einrichtung vorgesehen wäre. Dies wird unter Bezugnahme auf die Figur im Detail erläutert.

Unter vorhersehbar wird verstanden, dass wahlweise die zweite Einrichtung von Wärme oder die Adaptionseinrichtung an der Vorrichtung zum Austausch von Wärme angeordnet werden können. Dabei muss die zweite Einrichtung zum Austausch von Wärme nicht notwendigerweise an der gleichen Stelle bzgl. der Vorrichtung zum Austausch von Wärme wie die Adaptionseinrichtung angeordnet sein. So könnte beispielsweise eine Adaptionseinrichtung am Auslass der Vorrichtung anstelle einer im inneren des Gehäuses angeordneten zweiten Einrichtung zum Austausch von Wärme angeordnet sein.

Bei der ersten Einrichtung zum Austausch von Wärme handelt es sich bevorzugt um eine Heizeinrichtung.

In einer bevorzugten Ausführungsform der Erfindung ist die erste Adaptionseinrichtung an dem Luftauslass der Vorrichtung zum Austausch von Wärme angeordnet. Das bedeutet, dass die Adaptionseinrichtung hier bevorzugt außerhalb des Gehäuses angeordnet ist, was insofern vorteilhaft ist, als die Adaptionseinrichtung im Bedarfsfall relativ leicht zugänglich ist und ausgewechselt bzw. abgenommen werden kann.

In einer weiteren bevorzugten Ausführungsform ist eine Halteeinrichtung vorgesehen, mit der die Adaptionseinrichtung gegenüber dem Gehäuse fixiert werden kann. Dabei kann es sich beispielsweise um Halteeinrichtungen mit Schraubverbindungen, Klemmverbindungen, Rastverbindungen und dergleichen handeln. Dabei kann die Adaptionseinrichtung so an dem Gehäuse fixiert sein, dass sie im Wesentlichen den vollständigen Querschnitt des Lufteinlasses bedeckt; sie kann jedoch auch nur einen Teil des Querschnitts bedecken.

Besonders bevorzugt ist die Halteeinrichtung geeignet, anstelle der ersten Adaptionseinrichtung eine zweite Einrichtung zum Austausch von Wärme wenigstens gegenüber dem Gehäuse zu fixieren. Bei dieser zweiten Einrichtung zum Austausch von Wärme kann es sich beispielsweise um einen Kondensator, einen Verdampfer oder dergleichen handeln. Bevorzugt weisen die Adaptionseinrichtungen einerseits und die zweite Einrichtung zum Austausch von Wärme andererseits einander angepasste Rahmeneinrichtungen auf, um so wahlweise mit dem Gehäuse verbunden werden zu können. Dabei kann die Halteeinrichtung beispielsweise an einer Seite eine Gelenkverbindung aufweisen und auf der anderen Seite eine Rastverbindung.

Bevorzugt ist die erste Adaptionseinrichtung aus einem Kunststoffmaterial hergestellt, welches eine hohe Hitzebeständigkeit aufweist.

Bei der ersten Adaptionseinrichtung kann es sich um ein einteiliges Gebilde handeln; die erste Adaptionseinrichtung kann jedoch auch aus mehreren Komponenten bzw. Elementen zusammengesetzt sein.

Weiterhin können auch mehrere Adaptionseinrichtungen an unterschiedlichen Stellen innerhalb oder außerhalb des Gehäuses der Vorrichtung zum Austausch von Wärme vorgesehen sein, wobei bei einer besonders bevorzugten Ausführungsform durch ein Zusammenwirken dieser mehreren Adaptionseinrichtungen die erfindungsgemäße Anpassung bzw. Beeinflussung der Luftströmung an eine anstelle dieser Adaptionseinrichtungen angeordneten zweiten Einrichtung zum Austausch von Wärme stattfindet.

In einer weiteren bevorzugten Ausführungsform der Erfindung weist die erste Adaptionseinrichtung Fixiereinrichtungen auf, um die erste Adaptionseinrichtung gegenüber dem Gehäuse zu fixieren. Dabei kann es sich, wie oben erwähnt, um Schraubverbindungen, Klemmverbindungen, Rastverbindungen und dergleichen handeln.

Erfindungsgemäß weist die erste Adaptionseinrichtung wenigstens einen gegenüber der Hauptströmungsrichtung der Luft geneigten Abschnitt auf. Dabei handelt es sich um einen Wandabschnitt, der in einem vorgegebenen Winkel gegenüber der Hauptströmungsrichtung der Luft angeordnet ist. Durch diesen Abschnitt wird zumindest eine teilweise Änderung der Hauptströmungsrichtung der Luft erreicht. Bei einer bevorzugten Ausführungsform weist die Adaptionseinrichtung eine wenigstens abschnittsweise trichterförmige Gestalt auf. Auf diese Weise wird bewirkt, dass der Strömungsquerschnitt der durch die Adaptionseinrichtung tretenden Luft verengt werden kann.

In einer weiteren bevorzugten Ausführungsform der Erfindung weist die erste Adaptionseinrichtung eine im wesentlichen symmetrische Gestalt auf. Durch diese symmetrische Gestalt wird eine im wesentlichen über den Querschnitt der Strömungsrichtung verteilte symmetrische Beeinflussung der Strömungsrichtungen erreicht.

In einer weiteren bevorzugten Ausführungsform der Erfindung weist die erste Adaptionseinrichtung eine Vielzahl von Abschnitten auf, die gegenüber der Hauptströmungsrichtung der Luft und einem vorgegebenen Winkel geneigt sind. Dabei liegt dieser Winkel zwischen 0 Grad und 90 Grad, bevorzugt zwischen 20 Grad und 80 Grad und, besonders bevorzugt, zwischen 40 Grad und 60 Grad. Die Winkel, unter denen die einzelnen Abschnitte gegenüber der Hauptströmungsrichtung der Luft geneigt sind, können jedoch auch unterschiedlich sein und in den angegebenen Bereichen liegen.

In einer weiteren bevorzugten Ausführungsform weist die erste Adaptionseinrichtung wenigstens eine erste Öffnung auf, durch welche die Luft wenigstens abschnittsweise im wesentlichen ohne Änderung der Hauptströmungsrichtung hindurchtritt. Bevorzugt sind in dieser Öffnung keine Wände und/oder Abschnitte vorgesehen, besonders bevorzugt keine Abschnitte, welche gegenüber der Hauptströmungsrichtung der Luft geneigte Flächen aufweisen.

In einer weiteren bevorzugten Ausführungsform der Erfindung weist die erste Adaptionseinrichtung eine Vielzahl von Öffnungen auf, durch die die Luft hindurchtreten kann. Dabei kann es sich teilweise um Öffnungen handeln, durch welche die. Luft im Wesentlichen ohne Änderung der Hauptströmungsrichtung hindurchtritt und andere Öffnungen, die von geneigten Abschnitten umgeben sind, so dass sich die Strömungsrichtung der Luft in diesen Öffnungen bzw. beim Durchgang durch diese Öffnung ändert. Weiterhin können die einzelnen Öffnungen in Richtung der Hauptströmungsrichtung der Luft einen sich ändernden Querschnitt aufweisen.

So kann beispielsweise eine Öffnung vorgesehen sein, deren Querschnitt sich in einer der Hauptströmungsrichtung der Luft entgegengesetzten Richtung verjüngt. Dabei kann diese Verjüngung symmetrisch, asymmetrisch oder auch nur abschnittsweise auftreten.

In einer weiteren bevorzugten Ausführungsform der Erfindung ist die erste Öffnung, deren Querschnitt sich in der Hauptströmungsrichtung der Luft verjüngt, im Wesentlichen in einem geometrisch zentralen Bereich der Adaptionseinrichtung angeordnet. Auf diese Weise können die Strömungsverhältnisse in besonders vorteilhafter Weise an diejenigen einer anstelle der Adaptionseinrichtung vorhandenen Einrichtungen zum Austausch von Wärme angepasst werden.

Bei einer weiteren bevorzugten Ausführungsform der Erfindung weist die erste Adaptionseinrichtung wenigstens eine zweite Öffnung auf, deren Querschnitt sich in einer der Hauptströmungsrichtung entgegengesetzten Strömungsrichtung der Luft verjüngt, das heißt, der Querschnitt dieser zweiten Öffnung verjüngt sich in einer der ersten Öffnung entgegengesetzten Richtung.

In einer weiteren bevorzugten Ausführungsform der Erfindung ist eine Vielzahl von zweiten Öffnungen vorgesehen, die besonders bevorzugt im Wesentlichen symmetrisch um die erste Öffnung verteilt ist. Dabei kann die erste Öffnung beispielsweise von vier, von sechs oder auch mehreren zweiten Öffnungen umgeben sein.

In einer weiteren bevorzugten Ausführungsform der Erfindung ist die Neigung wenigstens eines Abschnitts der Adaptionseinrichtung gegenüber der Hauptströmungsrichtung der Luft variabel. Dies bedeutet, dass die Beeinflussung der. Hauptströmungsrichtung der Luft für die Adaptionseinrichtung variabel ist. Dies kann beispielsweise dadurch bewerkstelligt werden, dass ein Abschnitt bzw. eine Wand gegenüber der Hauptströmungsrichtung der Luft gedreht werden kann.

In einer weiteren bevorzugten Ausführungsform der Erfindung ist die erste Adaptionseinrichtung zwischen dem Lufteinlass und dem Luftauslass angeordnet. Dabei kann es sich beispielsweise um einen Wandabschnitt handeln, der zwischen dem Lufteinlass und dem Luftauslass angeordnet ist. In einer bevorzugten Ausführungsform der Erfindung kann dieser Wandabschnitt die Strömungsrichtung der durch das Gehäuse hindurchtretenden Luft beeinflussen, und somit in variabler Weise die Hauptströmungsrichtung der Luft durch das Gehäuse.

In einer weiteren bevorzugten Ausführungsform der Erfindung weist die erste Adaptionseinrichtung eine Rahmeneinrichtung auf, innerhalb derer mindestens eine der Öffnungen, bevorzugt sämtliche Öffnungen, angeordnet sind. Diese Rahmeneinrichtung dient auch zur Befestigung der Adaptionseinrichtung an dem Gehäuse.

In einer weiteren bevorzugten Ausführungsform der Erfindung kann die Rahmeneinrichtung Versteifungseinrichtungen, wie beispielweise Stege oder dergleichen, aufweisen. Weitere Vorteile und Ausführungsformen der erfindungsgemäßen Vorrichtung zum Austausch von Wärme ergeben sich aus den beigefügten Zeichnungen.

Darin zeigen:
- Fig. 1: eine Vorrichtung zum Austausch von Wärme ohne Adaptionseinrichtung;
- Fig. 2: eine Vorrichtung zum Austausch von Wärme mit erfindungsgemäßer Adaptionseinrichtung;
- Fig. 3: eine erfindungsgemäße Adaptionseinrichtung in einer ersten Ausführungsform;
- Fig. 4: eine erfindungsgemäße Adaptionsvorrichtung in einer zweiten Ausführungsform;
- Fig. 5a: eine Darstellung zur Veranschaulichung der Wirkungsweise der Adaptionseinrichtung; und
- Fig. 5b: eine weitere Darstellung zur Veranschaulichung der Wirkungsweise der Adaptionseinrichtung.

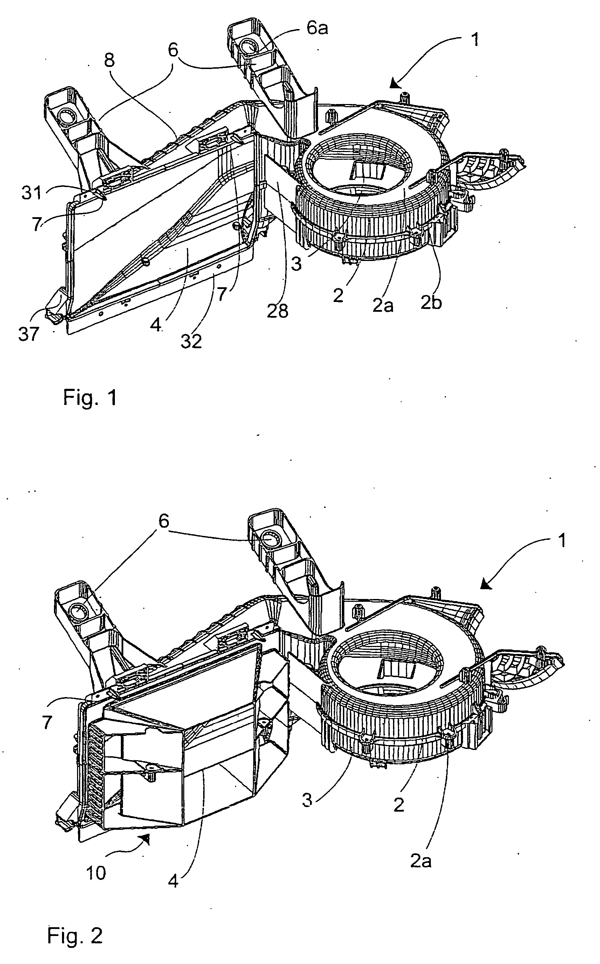

Fig. 1 zeigt eine Vorrichtung 1 zum Austausch von Wärme ohne die erfindungsgemäße Adaptionseinrichtung. Dabei bezieht sich Bezugszeichen 2 auf ein Gehäuse für die Vorrichtung mit Bezugszeichen 3 auf eine Öffnung, durch welche Luft angesaugt werden kann, das heißt einen Einlass.

Das Bezugszeichen 2a zeigt eine in dieser Figur oberen Gehäuseteil und das Bezugszeichen 2b einen unteren Gehäuseteil.

Das Gehäuse weist im Bereich des Lufteinlasses 3 einen gekrümmten bzw. schneckenförmigen Abschnitt auf, an den sich ein erster gerader Abschnitt sowie ein zweiter gerader Abschnitt anschließt. Dabei ist der zweite gerade Abschnitt, der eine Rückwand 8 aufweist, gegenüber dem ersten geraden Abschnitt um einen vorgegebenen Winkel geneigt angeordnet.

Über Verbindungen 5 können die beiden Gehäuseteile 2a, 2b aneinander befestigt werden. Bei den Verbindungseinrichtungen 5 kann es sich beispielsweise um Einrichtungen mit Schraubgewinden handeln, um Einrichtungen mit Rastverschlüssen und dergleichen. Das Bezugszeichen 6 kennzeichnet zwei Befestigungseinrichtungen, mit denen die Vorrichtung beispielsweise an einem Rahmen eines Kraftfahrzeugs oder dergleichen befestigt werden kann. Diese Befestigungseinrichtungen weisen Öffnungen 6a, beispielsweise zur Durchführung von Schrauben und ähnlichen Elementen, auf.

Das Bezugszeichen 7 kennzeichnet eine Halteeinrichtung, mit der an der Vorrichtung eine Einrichtung zum Austausch von Wärme, wie beispielsweise Verdampfer, Kondensatoren oder dergleichen, oder eine Adaptionseinrichtung befestigt werden können. Die Bezugszeichen 31, 32 und 37 kennzeichnen weitere Befestigungselemente zur Anbringung weiterer Einrichtungen.

Der mit den Bezugszeichen 2a und 2b gekennzeichnete Bereich des Gehäuses 2, in welchem auch der Einlass 3 angeordnet ist in dieser Ausführungsform schneckenartig ausgebildet.

In einer Version weist die Bauanordnung eine (hier nicht gezeigte) weitere Einrichtung zum Austausch von Wärme, wie einen Verdampfer, auf. Dagegen sind bei anderen Versionen der Bauanordnung zum Austausch von Wärme keine Verdampfer vorhanden. Aus dem Nichtvorhandensein der Verdampfer ergeben sich erhebliche Veränderungen der Leistungsfähigkeit der Baugruppe. So verändert sich beispielsweise die Aerodynamik bzw. die Strömungsverhältnisse innerhalb der Bauanordnung, was zu einer Störung der Regelungen für die thermischen Strömungsgleichgewichte führt.

So tritt beispielsweise eine Erhöhung des Strömungswiderstands auf. Daneben wird auch die strömungsdynamische Leistungsfähigkeit verändert; insbesondere steigt der Verbrauch bzw. der Energiebedarf des (nicht gezeigten) Gebläsemotors.

In Fig. 2 ist eine erfindungsgemäße Vorrichtung zum Austausch von Wärme mit einer erfindungsgemäßen Adaptionseinrichtung 10 dargestellt.

Wie oben ausgeführt, ist die trichterförmige Adaptionseinrichtung 10 an der Vorrichtung 1 zum Austausch von Wärme angeordnet, wobei die Adaptionseinrichtung 10 geneigte Abschnitte in Form gewinkelter Seitenwände aufweist, welche eine Anpassung der Leistungsverluste sowie Strömungshomogenität gewährleisten. Weiterhin wird die Vorrichtung 1 derart ausgeführt, dass eine direkte Aufnahme der Adaptionseinrichtung möglich ist. Die Adaptionseinrichtung 10 wird mit Halteeinrichtungen 7 gegenüber der Vorrichtung 1 zum Austausch von Wärme angeordnet bzw. befestigt. Die Halteeinrichtungen 7 sind an dem Gehäuse um den Auslass 4 herum angeordnet. Das Bezugszeichen 8 kennzeichnet einen Abschnitt bzw. eine Wand des Gehäuses, der dem Auslass 4 gegenüberliegt.

In Fig.. 3 ist eine erfindungsgemäße Adaptionseinrichtung 10 dargestellt. Dabei bezieht sich das Bezugszeichen 15 auf die Vielzahl von Wänden bzw. Deflektoren, die in der trichterartigen Adaptionseinrichtung 10 angeordnet sind. Diese einzelnen Wände bzw. Deflektoren weisen gegenüber einer Ebene E, die durch die Länge I und die Breite b aufgespannt wird, vorgegebene gleich große Neigungswinkel auf. Es ist jedoch auch möglich, dass sich die einzelnen Neigungswinkel unterscheiden. Die Bezugszeichen 14a und 14b kennzeichnen obere und untere Wände bzw. Deflektoren, die ebenfalls gegenüber der vorgegebenen Ebene E geneigt sind.

Die Anzahl und die Orientierung dieser Deflektoren erlauben es den Leistungsverlust und die Strömungsverteilung innerhalb der Vorrichtung anzupassen. Auf diese Weise können die Strömungsverhältnisse an die Strömungsverhältnisse angepasst werden, die eine anstelle der Adaptionseinrichtung 10 eingesetzte Einrichtung zum Austausch von Wärme bewirken würde.

Das Bezugszeichen 17a bezieht sich auf Wände, die die Bereiche 13a und 13b voneinander abgrenzen und ebenfalls die Strömung der Luft durch die Adaptionseinrichtung 10 beeinflussen. Ebenso trennt eine Wand 17b die Bereiche 13c und 13d. Der Bereich 13a wird einerseits durch den Deflektor bzw. die Wand 15a begrenzt, andererseits durch die genannte Zwischenwand 17a und schließlich durch die obere Begrenzungswand 16a und die untere Begrenzungswand 16b sowie den Außenwandbereich 25a. Dabei können auch die Zwischenwände 17a und 17b, sowie die äußeren Wände 25a und 25b gegenüber der Ebene E₁ gewinkelt sein.

Das Bezugszeichen 12 kennzeichnet einen zentralen Bereich bzw. eine zentrale Öffnung durch den ebenfalls Luft hindurchtritt.

Das Bezugszeichen 24 kennzeichnet eine Rahmeneinrichtung, mit welcher die Adaptionseinrichtung an der Vorrichtung zum Austausch von Wärme befestigt wird.

Bezugszeichen 20 kennzeichnet eine Befestigungseinrichtung, mit welcher die Adaptionseinrichtung zusätzlich, beispielsweise gegenüber der Fahrzeugkarosserie befestigt werden kann. Das Bezugszeichen 18 bezieht sich auf Stege, die der Versteifung dienen und Bezugszeichen 22 auf eine zusätzliche untere Stabilisierungseinrichtung.

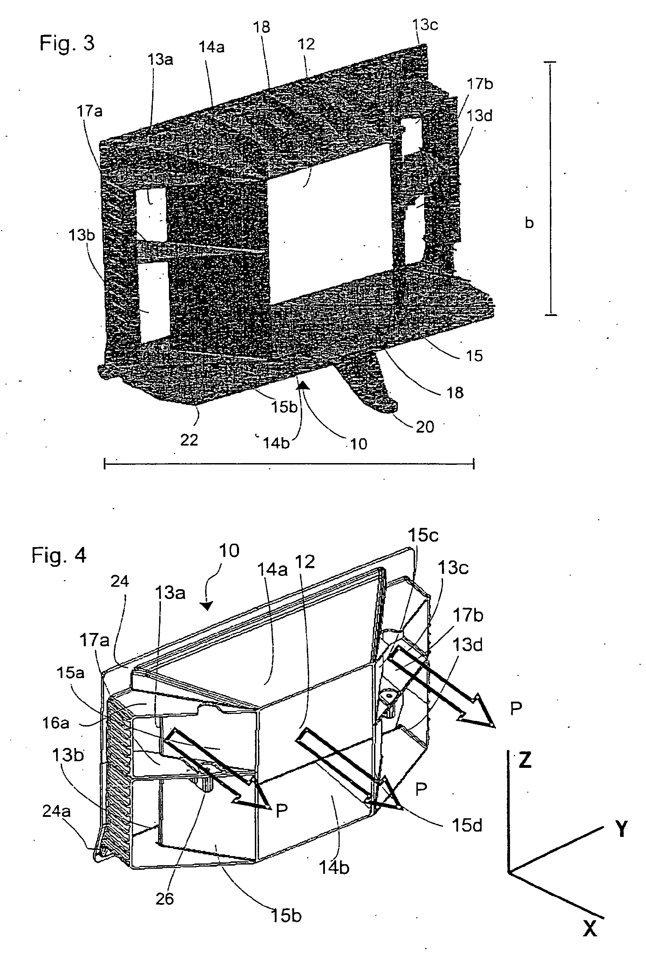

In Fig. 4 ist eine weitere Ausführungsform der erfindungsgemäßen Adaptionseinrichtung dargestellt. Dabei bezieht sich das Bezugszeichen 26 auf eine weitere Halteeinrichtung, um die Adaptionseinrichtung 10 gegenüber weiteren Bauteilen zu befestigen. Die einzelnen Pfeile P kennzeichnen die Strömungsrichtung der Luft, die in der angezeigten Richtung durch die Adaptionseinrichtung 10 und anschließend durch die Vorrichtung 1 zum Austausch von Wärme tritt. Dabei tritt die Luft sowohl durch den zentralen Bereich 12, als auch durch die äußeren Bereichen 13a, 13b, 13c und 13d hindurch.

Dies bedeutet, dass sich die Deflektoren bzw. Wände 15 im Wesentlichen in die Richtungen x, y und die Deflektoren 14a und 14b in die Richtungen x, z erstrecken.

Wie sich aus dem Koordinatensystem in Fig. 4 ergibt, ist x die Querrichtung, y die Längsrichtung der Adaptionseinrichtung 10 und z deren Höhe.

Für den beschriebenen Fall, dass es sich bei der Adaptionseinrichtung 10 um eine hinzugefügte Einrichtung handelt, nimmt diese den Platz des Verdampfers und des Kondensators ein.

Es ist jedoch auch möglich, die Modifikation, das heißt die Adaptionseinrichtung 10, nicht am Ausgang der Vorrichtung zum Austausch von Wärme anzuordnen, sondern in ihrem Inneren. In diesem Fall nimmt diese Einrichtung im Inneren in gleicher Weise den Platz der zweiten Einrichtung zum Austausch von Wärme ein, wobei eine Adaptionseinrichtung der in den Figuren 3 oder 4 gezeigten Art auch durch eine entsprechend angepasste Wand, ersetzt werden kann.

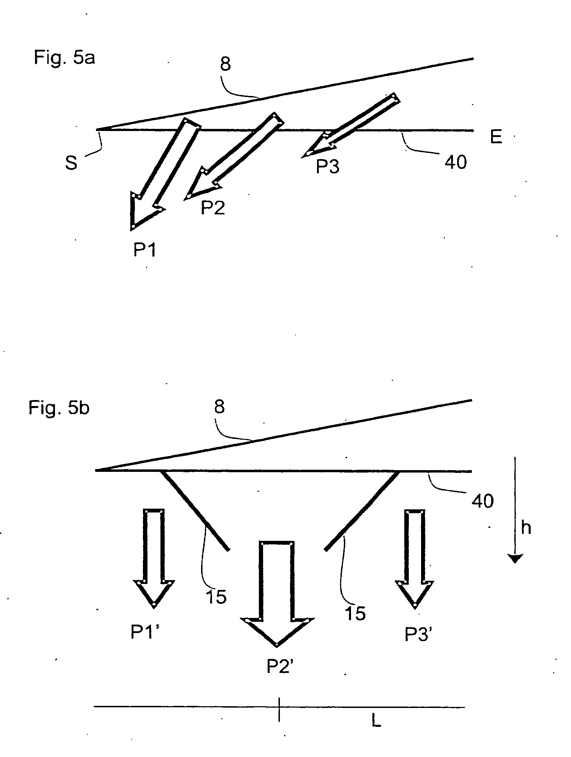

Unter Bezugnahme auf die Figuren 5a und 5b wird die Beeinflussung der Strömungsrichtung der Luft durch die erfindungsgemäße Adaptionseinrichtung erläutert. Dabei ist in Fig. 5a der Zustand ohne die erfindungsgemäße Adaptionseinrichtung gezeigt, das heißt, ein Zustand entsprechend der in Fig. 1 dargestellten Vorrichtung zum Austausch von Wärme ohne Adaptionseinrichtung. 5b zeigt die Verhältnisse mit eingesetzter Adaptionseinrichtung, wobei die Seitenwände 15 schematisch durch Linien angedeutet sind. Das Bezugszeichen 8 bezieht sich jeweils auf die Rückwand des Gehäuses, wie auch in den Figuren 1 und 2 gezeigt. Das Bezugszeichen 40 kennzeichnet eine Draufsicht auf die Ebene des Auslasses 4.

Wie in Fig. 5a gezeigt, strömt durch die Vorrichtung tretende Luft ohne die erfindungsgemäße Adaptionseinrichtung bevorzugt in der Figur nach links, das heißt, die größten Anteile der Luft treten auf der linken Seite des Auslasses aus. Hinsichtlich ihrer Richtung ist dabei die Strömungsrichtung der austretenden Luft nicht senkrecht zu der Ebene des Auslasses 7 gelegen, sondern sie driftet ebenfalls in Fig. 5a nach links ab. Durch diese Strömungsverhältnisse werden die thermischen und strömungsdynamischen Gleichgewichte der Vorrichtung gestört, was eine Regelung der Temperaturen erschwert. Auch wird in diesem Fall der Energiebedarf des Gebläsemotors erhöht. Daher ergeben sich ungleichmäßige Geschwindigkeits-, Druck- und Temperaturverteilungen der durch die Vorrichtung tretenden Luft.

Wird, wie in Fig. 5b gezeigt, die erfindungsgemäße Adaptionseinrichtung an die Vorrichtung zum Austausch von Wärme bzw. das Gehäuse angeordnet, so ergeben sich die durch die Pfeile P1', P2' und P3' gezeigten Strömungsverhältnisse. In diesem Fall strömt ein größerer Anteil der durchtretenden Luft in Richtung des Pfeils P2' durch die Öffnung 12 im Zentrum der Adaptionseinrichtung. Kleinere Anteile, P1' und P3' fließen durch die jeweiligen seitlichen Öffnungen 13a bis 13d. Dabei werden durch die erfindungsgemäße Adaptionseinrichtung 10 die Strömungsverhältnisse in etwa symmetrisch von dem Pfeil P2, das heißt um den Anteil der Strömung, der durch die zentrale Öffnung der Adaptionseinrichtung tritt, verteilt.

Um eine derartige Aufteilung zu erreichen, können auch, wie oben ausgeführt, einige der Wände 15a bis 15d unterschiedliche Neigungswinkel gegenüber der Hauptströmungsrichtung der Luft, die durch den Pfeil h angezeigt ist, aufweisen.

Damit wird durch die erfindungsgemäße Adaptionseinrichtung 10 die Luft gleichmäßig und homogen verteilt, und es ergeben sich insbesondere keine Links-/Rechts-Unterschiede bezüglich der Luftverteilung, wohingegen sich die Luft im Fall von Fig. 5a ohne die Adaptionseinrichtung 10 im Wesentlichen an einer Ecke bzw. einer Seite S des Gehäuses konzentriert.

## Patentansprüche

1. Vorrichtung zum Austausch von Wärme, insbesondere für ein Kraftfahrzeug, mit wenigstens einem Gehäuse (2), in welchem Luft wenigstens abschnittsweise auf einem vorbestimmten Pfad geführt wird, wenigstens einer ersten Einrichtung zum Austausch von Wärme; wenigstens einem Lufteinlass (3) und wenigstens einem Luftauslass (4); wobei wenigstens eine erste Adaptionseinrichtung (10) auf dem Pfad der Luft angeordnet ist und die Beeinflussung einer durch die erste Adaptionseinrichtung (10) hindurchtretenden Luftströmung an die Beeinflussung einer anstelle der ersten Adaptionseinrichtung (10) vorsehbaren zweiten Einrichtung zum Austausch von Wärme angepasst ist, wobei die erste Adaptationseinrichtung (10) wenigstens eine erste Wand (17) aufweist, durch welche die Hauptströmungsrichtung der durch die erste Adaptationseinrichtung (10) hindurchtretenden Luft beeinflusst wird,
**dadurch gekennzeichnet, dass**
die erste Adaptionseinrichtung (10) im Wesentlichen den vollständigen Querschnitt des Luftauslasses (4) abdeckt, und eine Vielzahl von zweiten Wänden (13) aufweist, die gegenüber der Hauptströmungsrichtung der Luft unter einen vorgegebenen Winkel geneigt sind.

2. Vorrichtung nach Anspruch 1,
**dadurch gekennzeichnet, dass**
die erste Adaptionseinrichtung (10) an dem Luftauslass (4) der Vorrichtung zum Austausch von Wärme angeordnet ist.

3. Vorrichtung nach wenigstens einem der vorangegangen Ansprüche,
**dadurch gekennzeichnet, dass**
wenigstens eine Halteeinrichtung (7) vorgesehen ist, mit der die Adaptionseinrichtung (10) gegenüber wenigstens dem Gehäuse (2) fixiert werden kann.

4. Vorrichtung nach Anspruch 3,
**dadurch gekennzeichnet, dass**
die Halteeinrichtung (7) geeignet ist, anstelle der ersten Adaptionseinrichtung (10) eine zweite Einrichtung zum Austausch von Wärme wenigstens gegenüber dem Gehäuse (2) zu fixieren.

5. Vorrichtung nach wenigstens einem der vorangegangen Ansprüche,
**dadurch gekennzeichnet, dass**
die erste Adaptionseinrichtung (10) Fixiereinrichtungen aufweist, um die erste Adaptionseinrichtung (10) wenigstens gegenüber dem Gehäuse zu fixieren.

6. Vorrichtung nach wenigstens einem der vorangegangen Ansprüche,
**dadurch gekennzeichnet, dass**
die erste Adaptionseinrichtung (10) wenigstens abschnittsweise eine trichterförmige Gestalt aufweist.

7. Vorrichtung nach wenigstens einem der vorangegangen Ansprüche,
**dadurch gekennzeichnet, dass**
die erste Adaptionseinrichtung (10) eine im Wesentlichen symmetrische Gestalt aufweist.

8. Vorrichtung nach wenigstens einem der vorangegangen Ansprüche,
**dadurch gekennzeichnet, dass**
wenigstens eine zweite Wand (15) gegenüber der Hauptströmungsrichtung der Luft unter einem Winkel geneigt ist, der zwischen 0° und 90°, bevorzugt zwischen 20° und 80° und besonders bevorzugt zwischen 40° und 60° liegt.

9. Vorrichtung nach wenigstens einem der vorangegangen Ansprüche,
**dadurch gekennzeichnet, dass**
die erste Adaptionseinrichtung (10) eine erste Öffnung (12) aufweist, durch welche die Luft im Wesentlichen ohne Änderung der Hauptströmungsrichtung hindurchtritt.

10. Vorrichtung nach wenigstens einem der vorangegangen Ansprüche,
**dadurch gekennzeichnet, dass**
die erste Adaptionseinrichtung (10) eine Vielzahl von Öffnungen aufweist, durch die die Luft hindurchtreten kann.

11. Vorrichtung nach wenigstens einem der vorangegangen Ansprüche,
**dadurch gekennzeichnet, dass**
die erste Adaptionseinrichtung (10) wenigstens eine zweite Öffnung (13) aufweist, deren Querschnitt sich in einer der Hauptströmungsrichtung der Luft entgegengesetzten Richtung verjüngt.

12. Vorrichtung nach Anspruch 9,
**dadurch gekennzeichnet, dass**
die erste Öffnung (12) im wesentlichen in einem geometrisch zentralen Bereich der Adaptionseinrichtung (10) angeordnet ist

13. Vorrichtung nach Anspruch 9,
**dadurch gekennzeichnet, dass**
die erste Öffnung (12) wenigstens eine zweite Öffnung aufweist, deren Querschnitt sich in der Hauptströmungsrichtung der Luft verjüngt.

14. Vorrichtung nach Anspruch 9,
**dadurch gekennzeichnet, dass**
eine Vielzahl von zweiten Öffnungen (14) im wesentlichen symmetrisch um die erste Öffnung (12) verteilt ist.

15. Vorrichtung nach wenigstens einem der vorangegangen Ansprüche,
**dadurch gekennzeichnet, dass**
die Neigung wenigstens einer Wand der Adaptionseinrichtung (10) gegenüber der Hauptströmungsrichtung der Luft variabel ist.

16. Vorrichtung nach wenigstens einem der vorangegangen Ansprüche,
**dadurch gekennzeichnet, dass**
die erste Adaptionseinrichtung (10) auf dem Pfad der Luft zwischen dem Lufteinlass (3) und dem Luftauslass (4) angeordnet ist.

17. Vorrichtung nach wenigstens einem der vorangegangen Ansprüche,
**dadurch gekennzeichnet, dass**
die erste Adaptionseinrichtung eine Rahmeneinrichtung (24) aufweist, innerhalb derer die Öffnungen angeordnet sind.

18. Vorrichtung nach Anspruch 17,
**dadurch gekennzeichnet, dass**
die Rahmeneinrichtung (24) Versteifungseinrichtungen (24a) aufweist.

## Claims

1. A heat exchanging device, in particular for a motor vehicle, having at least one housing (2) in which air is fed in certain sections at least along a predetermined path, at least one first heating exchanging device, at least one air inlet (3) and at least one air outlet (4), at least one first adapter device (10) being positioned in the air path and the influence on an air flow passing through the first adapter device (10) being adapted to the influence of a second heat exchanging device which can be fitted instead of the first adapter device (20), the first adapter device (10) having at least one first wall (17) by means of which it the main direction of flow of the air passing through the first adapter device (10) is influenced,
**characterised in that**
the first adapter device (10) covers essentially the entire cross section of the air outlet (4) and has a multitude of second walls (13) which are inclined at a predetermined angle in relation to the main direction of air flow.

2. A device in accordance with claim 1,
**characterised in that**
the first adapter device (10) is positioned at the air outlet (4) of heat exchanging device.

3. A device in accordance with at least one of the preceding claims,
**characterised in that**
at least one retaining device (7) is provided by means of which the adapter device (10) can be fixed to at least the housing (2).

4. A device in accordance with claim 3,
**characterised in that**
the retaining device (7) is suitable for fixing a second heat exchanging device to the housing (2) instead of the first adapter device (10).

5. A device in accordance with at least one of the preceding claims,
**characterised in that**
the first adapter device (10) has fixing devices for fixing the first adapter device (10) to at least the housing.

6. A device in accordance with at least one of the preceding claims,
**characterised in that**
the first adapter device (10) is funnel-shaped in at least certain sections.

7. A device in accordance with at least one of the preceding claims,
**characterised in that**
the first adapter device (10) has an essentially symmetrical shape.

8. A device in accordance with at least one of the preceding claims,
**characterised in that**
at least one second wall (15) is inclined at an angle which lies between 0° and 90°, preferably between 20° and 80° and particularly preferably between 40° and 60°, in relation to the main direction of air flow.

9. A device in accordance with at least one of the preceding claims,
**characterised in that**
the first adapter device (10) has a first opening (120) through which the air passes essentially without changing the main direction of flow.

10. A device in accordance with at least one of the preceding claims,
**characterised in that**
the first adapter device (10) has a multitude of openings through which the air is able to pass.

11. A device in accordance with at least one of the preceding claims,
**characterised in that**
the first adapter device (10) has at least one second opening (13) with a cross section which tapers in the direction opposite the main direction of air flow.

12. A device in accordance with claim 9,
**characterised in that**
the first opening (12) is positioned essentially in a geometrically central area of the adapter device (10).

13. A device in accordance with claim 9,
**characterised in that**
the first opening (12) has at least one second opening with a cross section which tapers in the main direction of air flow.

14. A device in accordance with claim 9,
**characterised in that**
a multitude of second openings (14) is distributed essentially symmetrically around the first opening (12).

15. A device in accordance with at least one of the preceding claims,
**characterised in that**
the inclination of at least one wall of the adapter device (10) in relation to the main direction of air flow is variable.

16. A device in accordance with at least one of the preceding claims,
**characterised in that**
the first adapter device (10) is positioned on the air path between the air inlet (3) and the air outlet (4).

17. A device in accordance with at least one of the preceding claims,
**characterised in that**
the first adapter device (10) has a frame structure (24) within which the openings are positioned.

18. A device in accordance with claim 17,
**characterised in that**
the frame structure device (24) has reinforcing devices (24a).

## Revendications

1. Dispositif servant à l'échange de chaleur, en particulier pour un véhicule automobile, comprenant au moins un carter (2) dans lequel de l'air est dirigé, au moins partiellement, sur un trajet prédéfini, au moins un premier organe servant à l'échange de chaleur ; au moins une entrée d'air (3) et au moins une sortie d'air (4) ; où au moins un premier organe d'adaptation (10) est disposé sur le trajet de l'air, et l'influence d'un flux d'air traversant le premier organe d'adaptation (10) est adaptée à l'influence d'un deuxième organe servant à l'échange de chaleur et que l'on peut prévoir à la place du premier organe d'adaptation (10), où le premier organe d'adaptation (10) présente au moins une première paroi (17) à travers laquelle est influencée la direction principale d'écoulement de l'air traversant le premier organe d'adaptation (10),
**caractérisé en ce que** le premier organe d'adaptation (10) recouvre pratiquement la section complète de la sortie d'air (4) et présente une multiplicité de deuxièmes parois (13) qui, suivant un angle prédéfini, sont inclinées par rapport à la direction principale d'écoulement de l'air.

2. Dispositif selon la revendication 1, **caractérisé en ce que** le premier organe d'adaptation (10) est disposé sur la sortie d'air (4) du dispositif servant à l'échange de chaleur.

3. Dispositif selon au moins l'une ou l'autre des revendications précédentes, **caractérisé en ce qu'**il est prévu au moins un dispositif de retenue (7) avec lequel l'organe d'adaptation (10) peut être fixé au moins par rapport au carter (2).

4. Dispositif selon la revendication 3, **caractérisé en ce que** le dispositif de retenue (7) est approprié pour fixer, au moins par rapport au carter (2), un deuxième organe servant à l'échange de chaleur, à la place du premier organe d'adaptation (10).

5. Dispositif selon au moins l'une quelconque des revendications précédentes, **caractérisé en ce que** le premier organe d'adaptation (10) présente des éléments de fixation pour fixer le premier organe d'adaptation (10), au moins par rapport au carter.

6. Dispositif selon au moins l'une quelconque des revendications précédentes, **caractérisé en ce que** le premier organe d'adaptation (10) présente, au moins partiellement, une configuration en forme d'entonnoir.

7. Dispositif selon au moins l'une quelconque des revendications précédentes, **caractérisé en ce que** le premier organe d'adaptation (10) présente une forme pratiquement symétrique.

8. Dispositif selon au moins l'une quelconque des revendications précédentes, **caractérisé en ce qu'**au moins une deuxième paroi (15) est, suivant un angle, inclinée par rapport à la direction principale d'écoulement de l'air, angle qui est compris entre 0° et 90°, de préférence entre 20° et 80° et de façon particulièrement préférable entre 40° et 60°.

9. Dispositif selon au moins l'une quelconque des revendications précédentes, **caractérisé en ce que** le premier organe d'adaptation (10) présente une première ouverture (12) à travers laquelle passe l'air pratiquement sans modification de la direction principale d'écoulement.

10. Dispositif selon au moins l'une quelconque des revendications précédentes, **caractérisé en ce que** le premier organe d'adaptation (10) présente une multiplicité d'ouvertures à travers lesquelles l'air peut passer.

11. Dispositif selon au moins l'une quelconque des revendications précédentes, **caractérisé en ce que** le premier organe d'adaptation (10) présente au moins une deuxième ouverture (13) dont la section va en diminuant dans une direction opposée à la direction principale d'écoulement de l'air.

12. Dispositif selon la revendication 9, **caractérisé en ce que** la première ouverture (12) est disposée pratiquement dans une zone géométriquement centrale de l'organe d'adaptation (10).

13. Dispositif selon la revendication 9, **caractérisé en ce que** la première ouverture (12) présente au moins une deuxième ouverture dont la section va en diminuant dans la direction principale d'écoulement de l'air.

14. Dispositif selon la revendication 9, **caractérisé en ce qu'**une multiplicité de deuxièmes ouvertures (14) est répartie autour de la première ouverture (12), de façon pratiquement symétrique.

15. Dispositif selon au moins l'une quelconque des revendications précédentes, **caractérisé en ce que** l'inclinaison d'au moins une paroi de l'organe d'adaptation (10) est variable par rapport à la direction principale d'écoulement de l'air.

16. Dispositif selon au moins l'une quelconque des revendications précédentes, **caractérisé en ce que** le premier organe d'adaptation (10) est disposé sur le trajet de l'air entre l'entrée d'air (3) et la sortie d'air (4).

17. Dispositif selon au moins l'une quelconque des revendications précédentes, **caractérisé en ce que** le premier organe d'adaptation présente un élément (24) formant cadre à l'intérieur duquel sont disposées les ouvertures.

18. Dispositif selon la revendication 17, **caractérisé en ce que** l'élément (24) formant cadre présente des éléments de renfort (24a).
